# EUROPEAN PATENT SPECIFICATION

(11) **EP 1 629 057 B1**
(45) Date of publication and mention of the grant of the patent: **08.07.2009**
(21) Application number: 04731277.2
(22) Date of filing: 05.05.2004
(51) Int. Cl.: C09J 5/04, B27G 11/00

(54) **METHOD OF JOINING SURFACES**
VERFAHREN ZUR VERBINDUNG VON OBERFLÄCHEN
PROCEDE DE JONCTION DE SURFACES

(30) Priority: 20.05.2003 EP 03445058
(43) Date of publication of application: 01.03.2006
(73) Proprietor: Akzo Nobel Coatings International BV, 6800 SB Arnhem (NL)
(72) Inventor: NORLING, Hakan, Lars, Erik, 131 32 Nacka (SE); ABRAM, Eugeniusz, S-171 58 Solna (SE)
(74) Representative: Schalkwijk, Pieter Cornelis
(86) International application number: PCT/SE2004/000686
(87) International publication number: WO 2004/104124

(56) References cited:
- US-A- 4 431 757
- US-A- 5 234 519

## Description

The present invention relates to a method of joining surfaces. It also relates to a method of producing a wood based product.

In the manufacture of glued products such as laminated beams, veneered products, parquet flooring, core board, block board and plywood etc., assemblies of pieces of wooden materials are joined by applying an adhesive followed by a pressing step.

Some adhesives need a comparatively high content of a solvent, such as water, to have a suitable viscosity at application onto a surface. An excess of solvent is usually also required for emulsion based adhesives, also referred to as dispersion adhesives, and resin based adhesives in order to get a stable emulsion or a stable resin based adhesive. At higher solids content of an adhesive, the viscosity increase due to ageing of the emulsion is more pronounced than at lower solids content.

A gluing process involves a physical drying/film formation step and/or a chemical curing step. When an adhesive having comparatively high content of a solvent is used, the pressing time is prolonged in order to enable a sufficient physical drying/film formation process of the adhesive in the glue line. Adhesives which may require long pressing times, are usually those in the form of water-based emulsions, such as polyvinyl acetate adhesives or emulsion-polymer-isocyanate adhesives, or water-based resins of amino- or phenolic type. When using such adhesives, the moisture content of wooden materials to be glued often has to be lowered before gluing so that the final moisture content in the glued wooden product does not become too high. The lowering of the moisture content in combination with application of wet adhesive may give adverse effects due to the changes in moisture content, which may lead to movements in the materials, giving negative effects such as warping.

Another problem when using emulsion based adhesives is a difficulty in gluing together uneven surfaces. During pressing, the applied glue has a tendency to squeeze out, leaving too little left to be able to fill out the distance between the surfaces at all places.

In order to decrease the pressing time required, various solutions have been suggested. For example, EP 1190823 A2 discloses a method including heating of surfaces. Another approach is to dry the adhesive after application. Methods and devices related to drying of applied adhesives are discussed in the following references: US 3160543, US 4812366, US 5234519 and, EP 0979712 A1.

A problem arising when subjecting forced drying to the applied adhesive is that there is a quite narrow maximum time frame available between the forced drying step has ended and when the contacting and pressing of the surfaces has to be made. If too long time passes before the pressing step, the adhesive joint will be too weak due to too early film formation or pre-curing.

None of the cited references mentioned above discloses anything about how to increase or control the maximum amount of time allowed to pass between drying an adhesive layer and a subsequent pressing step. Furthermore, nothing is mentioned about gluing uneven surfaces.

It is an object of the present invention to provide a gluing method which gives high quality joints already at short pressing times, and which provides a long maximum time frame between the end of a forced drying step of an adhesive layer and the start of a subsequent pressing step. There is a further object of the present invention to provide an improved method of joining uneven surfaces.

The above-mentioned objects are achieved by a method of joining surfaces, comprising in the following order: applying an adhesive composition (A), comprising a solvent, onto a surface of a first piece of material, drying off the solvent, partially or completely, by forced drying, to give the adhesive composition (A) a solids content of X weight %, directly after the drying step, applying a component (C), comprising a solvent, having a solids content of Z weight %, onto a surface of a second piece of material, wherein Z<X, bringing together the two surfaces so that the adhesive composition (A) is in contact with the component (C), and, pressing the two surfaces against each other.

Suitably, the methods comprise in the following order: applying an adhesive composition (B), comprising a solvent, onto the surface of the second piece before applying the component (C), drying off the solvent, partially or completely, by forced drying, from the adhesive composition (B), to give the adhesive composition (B) a solids content of Y weight %, directly after the drying step, wherein Z<Y, and, applying the component (C) onto one or both of the adhesive composition (A) and the adhesive composition (B). The solvent is suitably partially dried off from the adhesive composition (A) and/or adhesive composition (B) applied.

By "adhesive composition" is herein meant a composition which in itself is capable of acting as an adhesive, not merely being a component of an adhesive requiring one or more further components to form an adhesive.

By "solids content" is herein meant the content of constituents of an adhesive, measured according to the following method: 1 g of adhesive is put in a metal lid and subjected to 120°C in a heating chamber for 30 minutes. The percentage of the adhesive remaining in the lid is defined as the solids content.

By "solvent" is herein meant any substance which is evaporates under the conditions above.

Suitably, from about 10 to about 100 weight % of the solvent is dried off from the adhesive composition (A), preferably from about 20 to about 90 weight %. Suitably, from about 10 to about 100 weight % of the solvent is dried off from the adhesive composition (B), preferably from about 20 to about 90 weight %.

Suitably, X is from about 20 to 100, preferably from about 35 to about 95, most preferably from about 50 to about 90. Suitably, Z is from about 0 to about 70, preferably from about 5 to about 60, most preferably from about 10 to about 50. Suitably, Y is from about 20 to about 100, preferably from about 35 to about 95, most preferably from about 50 to about 90.

The weight ratio applied adhesive composition (A) to component (C) per unit area is suitably from about 1:0.5 to about 50:1, preferably from about 1:1 to about 25:1, most preferably from about 2:1 to about 15:1.

By "forced drying" is herein meant any procedure increasing the drying rate compared to the natural drying of an adhesive layer applied onto a surface occurring due to exposure to ambient air and penetration into the substrate.

The solvent can be dried off by the use of any ways of forced drying, such as dry air, dry gases, air blowing or heating, preferably heating. Examples of suitable ways of heating are radiant heat (IR), warm air blowing, dry air blowing and microwave heating. Preferably, the solvent is dried off by the use of radiant heat.

The adhesive composition (A) and adhesive composition (B) can be of the same composition, or be of different composition. Preferably, the adhesive composition (A) and adhesive composition (B) comprise the same type of adhesive resin. Most preferably, the adhesive composition (A) and adhesive composition (B) are substantially identical. The adhesive composition (A) and adhesive composition (B) suitable for the present method can be any adhesive comprising a solvent. Preferably, the adhesive composition (A) and adhesive composition (B) do not have a polymer comprising an amide or imide bond as the main component.

Preferably, the adhesive compositions (A) and (B) are aqueous adhesive compositions. In one preferred embodiment of the invention, suitably, the adhesive composition (A) and the adhesive composition (B) belong to the group of polymer emulsion based adhesive compositions. In this case, preferred adhesive compositions are those based on polyvinyl acetate, ethylene-vinyl-acetate, emulsion polymer isocyanate, polyurethane, styrene-butadiene, and acrylates. Most preferably, the adhesive composition (A) and the adhesive composition (B) are polyvinyl acetate based adhesive compositions or emulsion polymer isocyanate based adhesive compositions.

In another preferred embodiment of the invention, suitably, the adhesive composition (A) and the adhesive composition (B) belong to the group of curable resin based adhesive compositions. In this case, preferably, the adhesive composition (A) and the adhesive composition (B) are amino resin based or phenolic resin based adhesive compositions.

One or both of the adhesive composition (A) and the adhesive composition (B) may also comprise both a polymer emulsion and a curable resin. One of the adhesive compositions (A) and (B) may also be of a polymer emulsion based adhesive composition while the other belong to the group of curable resin based adhesive compositions.

The original solids content, i.e. the solids content at the time of application, in the adhesive composition (A) and the adhesive composition (B) is suitably from about 1 to about 95 weight %, preferably from about 10 to about 90 weight %, even more preferably from about 30 to about 70 weight%, most preferably from about 40 to about 60 weight %.

The component (C) suitable for the present method is suitably fluid, and can be any component comprising a solvent. In one embodiment of the invention, the component (C) suitably consists substantially of the solvent, preferably substantially of water.

In another embodiment of the invention, the component (C) is suitably an adhesive composition belonging to the group of polymer emulsion based adhesive compositions or curable resin based adhesive compositions. The component (C) is suitably an aqueous adhesive composition. In the case of polymer emulsion based adhesive compositions, preferred adhesive compositions are those based on polyvinyl acetate, ethylene-vinyl-acetate, emulsion polymer isocyanate, polyurethane, styrene-butadiene, and acrylates. Most preferably, the component (C) is a polyvinyl acetate based adhesive composition or an emulsion polymer isocyanate based adhesive composition. In the case of curable resin based adhesive compositions, preferably, the component (C) is an amino resin based or phenolic resin based adhesive composition. The component (C) may also comprise one or more hardeners for one or more curable resins.

The solvent in the adhesive composition (A), the adhesive composition (B), and the component (C), can be any solvent suitable for use in adhesive compositions. Suitably, the solvent is water, or an organic solvent belonging to the group of alcohols, esters, and ketones. Examples of suitable alcohols include methanol, ethanol, propanol, glycols such as ethanediol and propanediol. Preferably, the solvent is water. The solvent in the adhesive composition (A), the adhesive composition (B) and the component (C) may also comprise a combination of solvents. Different solvents may also be used in the adhesive composition (A), the adhesive composition (B), and the component (C).

The pressing of the assembly is suitably performed at a pressure of from about 0.1 to about 10 MPa, preferably from about 0.5 to about 5 MPa, most preferably from about 0.75 to about 3 MPa.
The pressing time may vary, and depends on, for example, the adhesive system used, which product to be produced, and which type of pressing is used. In one suitable type of gluing process, the surfaces to be joined are assembled as a whole before the pressing step. In this case, the pressing time is suitably from about 0.01 to about 3000 seconds, preferably from about 0.1 to about 1000 seconds, most preferably from about 1 to about 60 seconds.
In another suitable type of gluing process, the surfaces to be joined are continuously assembled and pressed, moving through a roller press, band press, or friction press. In these cases the pressing time is suitable from about 0.001 to about 300 seconds, preferably from about 0.1 to about 60 seconds, most preferably from about 1 to about 30 seconds. In the particular case of a roller press, the pressing time is suitably from about 0.001 to about 10 seconds, preferably from about 0.1 to about 1 seconds.

The pressing is suitably performed at conventional ambient temperature, suitably 5-40°C, such as room temperature, without any heat added. In some cases, e.g. when curable resins are present, the pressing is suitably performed under heating. In those cases when heating is desired, the pressing temperature is suitably from about 40 to about 200°C, preferably from about 60 to about 130°C.

In a further embodiment of the invention, the solids contents in applied layers of the adhesive compositions (A) and (B) can be determined by measuring the solvent content in the adhesive layers using, for example, near infra-red (NIR) measuring devices. This enables a precise adjustment of the required drying effect, in terms of intensity and/or drying time, in order to obtain a certain assembly time and/or pressing time. For example, if IR drying is used, a measured value of solvent content can be used to adjust the IR intensity and/or drying time.

The surfaces to be joined in the present method can be of any type of material. Suitably, the surfaces are of ligno-cellulosic materials including paper, or synthetic or natural polymeric materials. Preferably, the surfaces are of wood-based materials. By wood-based materials is herein also included materials such as fibre-, chip-, and particleboard materials.

The invention is suitable for producing any types of glued products, particularly wood-based glued products such as laminated beams, veneered products, edge-glued products and parquet flooring.

In a preferred embodiment of the invention an aqueous dispersion of a polyvinyl acetate adhesive is applied onto one surface each of two pieces of wooden materials, whereupon water is dried off by using infra-red radiation so that the adhesive compositions both have a solids content of from about 60 to about 80 weight %. After some minutes, an aqueous dispersion of the same polyvinyl acetate adhesive dispersion is applied onto one of the dried adhesive layers and the two pieces are assembled and pressed together.

In another preferred embodiment of the invention an aqueous dispersion of a polyvinyl acetate adhesive is applied onto a surface of a piece of wooden material, whereupon water is dried off by using infra-red radiation so that the adhesive composition has a solids content of from about 60 to about 80 weight %. After some minutes, an aqueous dispersion of the same polyvinyl acetate adhesive dispersion is applied onto another surface of a piece of wooden material and the two pieces are assembled and pressed together.

The invention will now further be described in connection with the following examples which, however, not should be interpreted as limiting the scope of the invention.

### Examples

### Example 1:

A two-ply product was made using a water-based polyvinyl acetate adhesive having an original solids content of 50 weight %. The ambient temperature was 20°C. Two wooden pieces of 16 mm thickness of the size 140 mm x 50 mm were coated with 75 g/m² adhesive having an original solids content of 50 weight %. The adhesive layers of each piece were dried by heating using infra-red radiation so that both adhesive layers had a solids content (X, Y) of about 70 weight %. The new solids contents were determined by weighing the pieces. The pieces were then brought in contact with each other directly and pressed together at a pressure of 1.5 MPa for 10 minutes. The time span between drying the adhesive layers and the contacting of the layers was below 10 seconds. The adhesive strength was measured by doing a "chisel test" directly after pressing. In this test the two glued pieces are forced apart by using a chisel and the percentage of the glued surface that show fibre tear is determined.

### Example 2:

The same procedure as in Example 1 was repeated, except that the surfaces with applied adhesive were not brought in contact with each other until 2 minutes had passed after drying. The solids contents were determined by weighing the pieces both directly after heating and just before pressing. The adhesive strength measured by using the "chisel test".

### Example 3 (the invention):

A two-ply product was made following the same steps as in Example 1, except that the surfaces with applied adhesive were allowed to rest for 2 minutes followed by application of additional adhesive to one of the surfaces. The adhesive was of the same type as before but with a solids content (Z) of 25 weight % and applied in an amount of 21 g/m². The surfaces were then brought in contact with each other and the assembly was pressed at a pressure of 1.5 MPa for 10 minutes. The adhesive strength measured by using the "chisel test".

### Example 4 (the invention):

A two-ply product of the same material and size as in examples 1-3, and by using the same type of adhesive, was made. However, only one of the pieces was coated, with 100 g/m² of adhesive, having an original solids content of 50 weight %. The adhesive layer was subsequently dried to a solids content (X) of about 65 weight %, and allowed to rest for 2 minutes. The other piece was then coated with an adhesive of the same type as before but with a solids content (Z) of 25 weight % and applied in an amount of 60 g/m². The surfaces were then brought in contact with each other and the assembly was pressed at a pressure of 1.5 MPa for 10 minutes. The adhesive strength measured by using the "chisel test".

The results are presented in Table 1.

**Table 1.**

| | Adhesive strength (% fibre tear) | | |
|---|---|---|---|
| Time between drying and pressing | Example 1 & 2 | Example 3 | Example 4 |
| <10 seconds | 75-80 | 75-80 | - |
| 2 minutes | 30-40 | 70-80 | 70 |

It is concluded from Examples 1-4 that the method of the present invention gives excellent adhesive strength also when a certain period of time has passed between drying and pressing.

## Claims

1. A method of joining surfaces, comprising in the following order:
- applying an adhesive composition (A), comprising a solvent, onto a surface of a first piece of material,
- drying off the solvent, partially or completely, by forced drying, to give the adhesive composition (A) a solids content of X weight %, directly after the drying step,
- applying a component (C), comprising a solvent, having a solids content of Z weight %, onto a surface of a second piece of material, wherein Z<X,
- bringing together the two surfaces so that the adhesive composition (A) is in contact with the component (C), and,
- pressing the two surfaces against each other.

2. A method according to claim 1, comprising in the following order:
- applying an adhesive composition (B), comprising a solvent, onto the surface of the second piece before applying the component (C),
- drying off the solvent, partially or completely, by forced drying, from the adhesive composition (B), to give the adhesive composition (B) a solids content of Y weight %, directly after the drying step, wherein Z<Y, and,
- applying the component (C) onto the adhesive composition (B).

3. A method according to claim 1, comprising in the following order:
- applying an adhesive composition (B), comprising a solvent, onto the surface of the second piece before applying the component (C),
- drying off the solvent, partially or completely, by forced drying, from the adhesive composition (B), to give the adhesive composition (B) a solids content of Y weight %, directly after the drying step, wherein Z<Y, and,
- applying the component (C) onto both of the adhesive composition (A) and the adhesive composition (B).

4. A method according to any one of the claims 1-3, wherein from 10 to 100 weight % of the solvent is dried off from the adhesive composition (A).

5. A method according to any one of the claims 2-4, wherein at least 10 to 100 weight % of the solvent is dried off from the adhesive composition (B).

6. A method according to any one of the claims 1-5, wherein X is from 50 to 90.

7. A method according to any one of the claims 1-6, wherein Z is from 10 to 50.

8. A method according to any one of the claims 2-7, wherein Y is from 50 to 90.

9. A method according to any one of the claims 1-8, wherein the weight ratio applied adhesive composition (A) to component (C) per unit area is from 2:1 to 15:1.

10. A method according to any one of the claims 1-9, wherein the adhesive composition (A) and the adhesive composition (B) belong to the group of emulsion polymer based adhesive compositions.

11. A method according to any one of the claims 1-10, wherein the adhesive composition (A) and the adhesive composition (B) belong to the group of curable resin based adhesive compositions.

12. A method according to any one of the claims 1-11, wherein the component (C) is an adhesive composition belonging to the group of emulsion polymer based adhesive compositions.

13. A method according to any one of the claims 1-12, wherein the component (C) is an adhesive composition belonging to the group of curable resin based adhesive compositions.

14. A method according to any one of the claims 1-13, wherein the component (C) consists substantially of water.

15. A method according to any one of the claims 1-14, wherein the solvent is water.

16. A method according to claim 15, wherein the component (C) comprises one or more hardeners for the one or more curable resins.

17. A method according to any one of the claims 1-16, wherein the surfaces are of wood-based materials.

18. Use of the method according to any one of the claims 1-17 for producing a wood based glued product.

19. Use according to claim 18, wherein the wood based glued product is a laminated beam, an edge-glued product or parquet flooring.

## Patentansprüche

1. Verfahren zum Verbinden von Flächen, umfassend in der folgenden Reihenfolge:
- Auftragen einer Kleberzusammensetzung (A), die ein Lösungsmittel umfasst, auf eine Fläche eines ersten Materialstücks;
- partielles oder vollständiges Abtrocknen des Lösungsmittels durch Schnelltrocknen, so dass die Kleberzusammensetzung (A) direkt nach dem Trocknungsschritt einen Feststoffgehalt von X Gew.-% hat;
- Auftragen einer Komponente (C), die ein Lösungsmittel umfasst und einen Feststoffgehalt von Z Gew.-% aufweist, auf eine Fläche eines zweiten Materialstücks, wobei Z < X;
- Zusammenbringen der beiden Flächen, so dass die Kleberzusammensetzung (A) mit der Komponente (C) in Kontakt ist; und
- Aufeinanderdrücken der beiden Flächen.

2. Verfahren gemäß Anspruch 1, umfassend in der folgenden Reihenfolge:
- Auftragen einer Kleberzusammensetzung (B), die ein Lösungsmittel umfasst, auf die Fläche des zweiten Stücks, bevor man die Komponente (C) aufträgt;
- partielles oder vollständiges Abtrocknen des Lösungsmittels durch Schnelltrocknen aus der Kleberzusammensetzung (B), so dass die Kleberzusammensetzung (B) direkt nach dem Trocknungsschritt einen Feststoffgehalt von Y Gew.-% hat, wobei Z < Y; und
- Auftragen der Komponente (C) auf die Kleberzusammensetzung (B).

3. Verfahren gemäß Anspruch 1, umfassend in der folgenden Reihenfolge:
- Auftragen einer Kleberzusammensetzung (B), die ein Lösungsmittel umfasst, auf die Fläche des zweiten Stücks, bevor man die Komponente (C) aufträgt;
- partielles oder vollständiges Abtrocknen des Lösungsmittels durch Schnelltrocknen aus der Kleberzusammensetzung (B), so dass die Kleberzusammensetzung (B) direkt nach dem Trocknungsschritt einen Feststoffgehalt von Y Gew.-% hat, wobei Z < Y; und
- Auftragen der Komponente (C) sowohl auf die Kleberzusammensetzung (A) als auch auf die Kleberzusammensetzung (B).

4. Verfahren gemäß einem der Ansprüche 1 bis 3, wobei 10 bis 100 Gew.-% des Lösungsmittels aus der Kleberzusammensetzung (A) abgetrocknet werden.

5. Verfahren gemäß einem der Ansprüche 2 bis 4, wobei wenigstens 10 bis 100 Gew.-% des Lösungsmittels aus der Kleberzusammensetzung (B) abgetrocknet werden.

6. Verfahren gemäß einem der Ansprüche 1 bis 5, wobei X = 50 bis 90 ist.

7. Verfahren gemäß einem der Ansprüche 1 bis 6, wobei Z = 10 bis 50 ist.

8. Verfahren gemäß einem der Ansprüche 2 bis 7, wobei Y = 50 bis 90 ist.

9. Verfahren gemäß einem der Ansprüche 1 bis 8, wobei das Gewichtsverhältnis von aufgetragener Kleberzusammensetzung (A) zu Komponente (C) pro Flächeneinheit 2:1 bis 15:1 beträgt.

10. Verfahren gemäß einem der Ansprüche 1 bis 9, wobei die Kleberzusammensetzung (A) und die Kleberzusammensetzung (B) zur Gruppe der Kleberzusammensetzungen auf Emulsionspolymerbasis gehören.

11. Verfahren gemäß einem der Ansprüche 1 bis 10, wobei die Kleberzusammensetzung (A) und die Kleberzusammensetzung (B) zur Gruppe der Kleberzusammensetzungen auf der Basis eines härtbaren Harzes gehören.

12. Verfahren gemäß einem der Ansprüche 1 bis 11, wobei die Komponente (C) eine Kleberzusammensetzung ist, die zur Gruppe der Kleberzusammensetzungen auf Emulsionspolymerbasis gehört.

13. Verfahren gemäß einem der Ansprüche 1 bis 12, wobei die Komponente (C) eine Kleberzusammensetzung ist, die zur Gruppe der Kleberzusammensetzungen auf der Basis eines härtbaren Harzes gehört.

14. Verfahren gemäß einem der Ansprüche 1 bis 13, wobei die Komponente (C) im Wesentlichen aus Wasser besteht.

15. Verfahren gemäß einem der Ansprüche 1 bis 14, wobei es sich bei dem Lösungsmittel um Wasser handelt.

16. Verfahren gemäß Anspruch 15, wobei die Komponente (C) einen oder mehrere Härter für das eine oder die mehreren härtbaren Harze umfasst.

17. Verfahren gemäß einem der Ansprüche 1 bis 16, wobei die Flächen aus Materialien auf Holzbasis bestehen.

18. Verwendung des Verfahrens gemäß einem der Ansprüche 1 bis 17 zur Herstellung eines geleimten Produkts auf Holzbasis.

19. Verwendung gemäß Anspruch 18, wobei das geleimte Produkt auf Holzbasis ein Schichtholzbalken, ein Leimholzprodukt oder ein Parkettboden ist.

## Revendications

1. Procédé de jonction de surfaces, comprenant dans l'ordre suivant :
- l'application d'une composition adhésive (A), comprenant un solvant, sur une surface d'une première pièce de matériau,
- le séchage du solvant, partiellement ou complètement, par séchage forcé, pour donner à la composition adhésive (A) une teneur en substances solides de X % en poids, directement après l'étape de séchage,
- l'application d'un composant (C), comprenant un solvant, ayant une teneur en substances solides de Z % en poids, sur une surface d'une seconde pièce de matériau, où Z < X,
- le rassemblement des deux surfaces de sorte que la composition adhésive (A) est en contact avec le composant (C), et
- le pressage des deux surfaces l'une contre l'autre.

2. Procédé selon la revendication 1, comprenant dans l'ordre suivant :
- l'application d'une composition adhésive (B), comprenant un solvant, sur la surface de la seconde pièce avant l'application du composant (C),
- le séchage du solvant, partiellement ou complètement, par séchage forcé, de la composition adhésive (B), pour donner à la composition adhésive (B) une teneur en substances solides de Y % en poids, directement après l'étape de séchage, où Z < Y, et
- l'application du composant (C) sur la composition adhésive (B).

3. Procédé selon la revendication 1, comprenant dans l'ordre suivant :
- l'application d'une composition adhésive (B), comprenant un solvant, sur la surface de la seconde pièce avant l'application du composant (C),
- le séchage du solvant, partiellement ou complètement, par séchage forcé, de la composition adhésive (B), pour donner à la composition adhésive (B) une teneur en substances solides de Y % en poids, directement après l'étape de séchage, où Z < Y, et
- l'application du composant (C) à la fois sur la composition adhésive (A) et la composition adhésive (B).

4. Procédé selon l'une quelconque des revendications 1 à 3, dans lequel 10 à 100 % en poids du solvant de la composition adhésive (A) sont séchés.

5. Procédé selon l'une quelconque des revendications 2 à 4, dans lequel au moins 10 à 100 % en poids du solvant de la composition adhésive (B) sont séchés.

6. Procédé selon l'une quelconque des revendications 1 à 5, dans lequel X va de 50 à 90.

7. Procédé selon l'une quelconque des revendications 1 à 6, dans lequel Z va de 10 à 50.

8. Procédé selon l'une quelconque des revendications 2 à 7, dans lequel Y va de 50 à 90.

9. Procédé selon l'une quelconque des revendications 1 à 8, dans lequel le rapport en poids de la composition adhésive (A) appliquée sur le composant (C) par surface unitaire va de 2 : 1 à 15 : 1.

10. Procédé selon l'une quelconque des revendications 1 à 9, dans lequel la composition adhésive (A) et la composition adhésive (B) appartiennent au groupe de compositions adhésives à base de polymère en émulsion.

11. Procédé selon l'une quelconque des revendications 1 à 10, dans lequel la composition adhésive (A) et la composition adhésive (B) appartiennent au groupe de compositions adhésives à base de résine durcissable.

12. Procédé selon l'une quelconque des revendications 1 à 11, dans lequel le composant (C) est une composition adhésive appartenant au groupe de compositions adhésives à base de polymère en émulsion.

13. Procédé selon l'une quelconque des revendications 1 à 12, dans lequel le composant (C) est une composition adhésive appartenant au groupe de compositions adhésives à base de résine durcissable.

14. Procédé selon l'une quelconque des revendications 1 à 13, dans lequel le composant (C) est en grande partie constitué d'eau.

15. Procédé selon l'une quelconque des revendications 1 à 14, dans lequel le solvant est de l'eau.

16. Procédé selon la revendication 15, dans lequel le composant (C) comprend un ou plusieurs durcisseurs pour les une ou plusieurs résines durcissables.

17. Procédé selon l'une quelconque des revendications 1 à 16, dans lequel les surfaces sont formées à partir de matériaux à base de bois.

18. Utilisation du procédé selon l'une quelconque des revendications 1 à 17 pour produire un produit collé à base de bois.

19. Utilisation selon la revendication 18, dans laquelle le produit collé à base de bois est une poutre laminée, un produit à bords collés ou un plancher parqueté.
